(19) Europäisches Patentamt
European Patent Office
Office européen des brevets

(11) EP 4 382 574 B1

(12) EUROPEAN PATENT SPECIFICATION

(45) Date of publication and mention of the grant of the patent:
**18.02.2026 Bulletin 2026/08**

(21) Application number: **22852865.9**

(22) Date of filing: **22.07.2022**

(51) International Patent Classification (IPC):
***C08K 3/22*** *(2006.01)* ***C08K 3/28*** *(2006.01)*
***C01B 21/072*** *(2006.01)* ***C01F 7/02*** *(2022.01)*
***C09K 5/14*** *(2006.01)*

(52) Cooperative Patent Classification (CPC):
(C-Sets available)
**C01F 7/02; C01B 21/072; C08K 3/22; C08K 3/28; C08K 5/5419; C09K 5/14;** C08K 2003/2227; C08K 2003/282; C08K 2201/001; C08K 2201/005; C08K 2201/006; C08K 2201/014 (Cont.)

(86) International application number:
**PCT/JP2022/028465**

(87) International publication number:
**WO 2023/013441 (09.02.2023 Gazette 2023/06)**

(54) **COMPOSITION AND FILLER MIXTURE**

ZUSAMMENSETZUNG UND FÜLLSTOFFMISCHUNG

COMPOSITION ET MÉLANGE DE CHARGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.08.2021 JP 2021129048**

(43) Date of publication of application:
**12.06.2024 Bulletin 2024/24**

(73) Proprietor: **Tokuyama Corporation**
**Shunan-shi, Yamaguchi 745-8648 (JP)**

(72) Inventors:
- **FUJII, Saiko**
**Shunan-shi, Yamaguchi 745-8648 (JP)**
- **SAKAMOTO, Atsushi**
**Shunan-shi, Yamaguchi 745-8648 (JP)**
- **MASADA, Isao**
**Shunan-shi, Yamaguchi 745-8648 (JP)**

(74) Representative: **Dehns**
**10 Old Bailey**
**London EC4M 7NG (GB)**

(56) References cited:
**WO-A1-2020/138335**
**WO-A1-2020/241716**
**WO-A1-2021/079912**
**WO-A1-2021/109051**
**JP-A- 2012 121 793**
**JP-A- 2013 049 610**
**JP-A- 2014 193 965**
**JP-A- 2018 082 164**
**US-A1- 2021 147 681**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 3/22, C08L 83/04;**
**C08K 3/28, C08L 83/04**

## Description

### Technical Field

An embodiment of the present invention relates to a composition or filler mixture.

### Background Art

In recent years, as semiconductor elements have a higher output and an increased mounting density, a series of material called a thermal interface material has been more widely used in order to dissipate heat generated from the semiconductor elements. The thermal interface material is a material for alleviating thermal resistance of a path for releasing heat generated from heat generators such as semiconductor elements to, for example, a heat sink or a housing, and various forms such as sheets, gels, and greases are used. In general, the thermal interface material is a resin composition in which a thermally conductive filler is dispersed in a resin such as a silicone resin, and as the thermally conductive filler, for example, silica, alumina, or aluminum nitride is used. In such a resin composition, it is desired to increase the content of the thermally conductive filler in order to increase the thermal conductivity. Attempts have been made to improve filler filling properties.

As a means for improving the filling properties of the filler in the resin composition, combinations of fillers with various particle diameters are widely used. When fillers with various particle diameters are combined, particles with a small particle diameter enter voids between particles with a large particle diameter. This makes it easier to obtain high filling properties. For example, Patent Literatures 1 to 5 describe each composition containing two or more kinds of fillers.

### Citation List

### Patent Literature

Patent Literature 1: JP 2017-014445 A
Patent Literature 2: JP 2010-007039 A
Patent Literature 3: JP 2009-164093 A
Patent Literature 4: WO 2018/131486 A
Patent Literature 5: US 2021 147681 A1

### Summary of Invention

### Technical Problem

As described above, in order to achieve a high thermal conductivity, it is conceivable to increase the content of the thermally conductive filler. However, when the thermal conductivity is improved simply by increasing the content of the thermally conductive filler, the fluidity of the resin composition is lowered. That is, the thermal conductivity and the fluidity are considered to be in a trade-off relationship.

The thermal interface material is often used between a heat generator such as a device and a heat dissipation member such as a heat sink. Small gaps and irregularities often exist between the heat generator and the heat dissipation member. Therefore, the thermal interface material that is used between the heat generator and the heat dissipation member and is required to reduce the thermal resistance therebetween is required to have fluidity capable of filling the gaps and the irregularities (capable of following the gaps and the irregularities).

Here, the present inventors have conducted intensive research and have found that the conventional compositions described in Patent Literatures 1 to 4 have room for improvement in terms of the balance between high thermal conductivity and high fluidity.

An embodiment of the present invention provides a composition having high fluidity while having high thermal conductivity.

### Solution to Problem

As a result of the research conducted by the present inventors, it has been found that the above problem can be solved by the following configuration items. The configuration items of the present invention are as follows.

[1] A composition including:

a thermally conductive filler (A) having a cumulative volume 50% particle diameter (D50(A)) of 0.05 μm or more and less than 1.0 μm and a cumulative volume 90% particle diameter (D90(A)) of 2.0 μm or less in a particle size distribution curve determined by laser diffractometry;
a thermally conductive filler (B); and
a binder component (C), wherein
the composition satisfies the following requirements (1) to (3):

requirement (1): in the entire thermally conductive filler (B) used in the composition, a cumulative pore amount of pores with a pore diameter of 0.5 μm or less as calculated from a pore diameter distribution measured with a mercury porosimeter is 0.05 ml/g or less;
requirement (2): the entire thermally conductive filler (B) used in the composition has a cumulative volume 50% particle diameter (D50(B)) of from 1.0 to 100 μm; and
requirement (3): the entire thermally conductive filler (B) used in the composition has a cumulative volume 10% particle diameter (D10(B)) of 0.6 μm or more.

[2] The composition according to [1], wherein a ratio (SA/D90(A)) of a BET specific surface area SA [$m^2$/g] to the D90(A) [μm] of the thermally conductive filler (A) is 4.0 or more.
[3] The composition according to [1] or [2], wherein a ratio (Y/D90(A)) of a density ratio Y, namely a ratio (pressurized bulk density/true density) of a pressurized bulk density [g/$cm^3$] to a true density [g/$cm^3$], to the D90(A) [μm] of the thermally conductive filler (A) is 0.5 or more.
[4] The composition according to any one of [1] to [3], wherein a ratio (Y/SA $\times$ D90(A)) of a density ratio Y, namely a ratio (pressurized bulk density/true density) of a pressurized bulk density [g/$cm^3$] to a true density [g/$cm^3$], to a product of a BET specific surface area SA [$m^2$/g] multiplied by the D90(A) [μm] of the thermally conductive filler (A) is 0.08 or more.
[5] The composition according to any one of [1] to [4], wherein the thermally conductive filler (A) has a polyhedral spherical shape.
[6] The composition according to any one of [1] to [5], wherein the thermally conductive filler (A) has a D50(A) of 0.05 μm or more and less than 0.6 μm.
[7] The composition according to any one of [1] or [6], wherein a ratio (Y/ (SA $\times$ (D90(A) - D50(A)))) of a density ratio Y, namely a ratio (pressurized bulk density/true density) of a pressurized bulk density [g/$cm^3$] to a true density [g/$cm^3$], to a product (SA $\times$ (D90(A) - D50(A))) of a BET specific surface area SA [$m^2$/g] multiplied by a difference between the D90(A) [μm] and the D50(A) [μm] of the thermally conductive filler (A) is 0.14 or more.
[8] The composition according to any one of [1] to [7], wherein

based on 100 vol% of a total of the thermally conductive filler (A), the thermally conductive filler (B), and the binder component (C),
an amount of the thermally conductive filler (A) blended is from 1 to 45 vol%, and
an amount of the thermally conductive filler (B) blended is from 25 to 90 vol%.

[9] The composition according to any one of [1] to [8], wherein

the thermally conductive filler (A) includes alumina, and
the thermally conductive filler (B) includes aluminum nitride or alumina.

[10] A filler mixture including:

a thermally conductive filler (A) having a cumulative volume 50% particle diameter (D50(A)) of 0.05 μm or more and less than 1.0 μm and a cumulative volume 90% particle diameter (D90(A)) of 2.0 μm or less in a particle size distribution curve determined by laser diffractometry; and
a thermally conductive filler (B), wherein
the filler mixture satisfies the following requirements (4) to (6):

requirement (4): in the entire thermally conductive filler (B) used in the filler mixture, a cumulative pore amount of pores with a pore diameter of 0.5 μm or less as calculated from a pore diameter distribution measured with a mercury porosimeter is 0.05 ml/g or less;
requirement (5): the entire thermally conductive filler (B) used in the filler mixture has a cumulative volume

50% particle diameter (D50(B)) of from 1.0 to 100 $\mu$m; and
requirement (6): the entire thermally conductive filler (B) used in the filler mixture has a cumulative volume 10% particle diameter (D10(B)) of 0.6 $\mu$m or more.

[11] The filler mixture according to [10], wherein

the thermally conductive filler (A) includes alumina, and
the thermally conductive filler (B) includes aluminum nitride or alumina.

Advantageous Effects of Invention

An embodiment of the present invention can provide a composition having high fluidity while having high thermal conductivity.

Brief Description of Drawings

Fig. 1 is an SEM image of the thermally conductive filler (A-1) used in the following Examples.
Fig. 2 is an SEM image of the thermally conductive filler (A-3) used in the following Examples.
Fig. 3 is an SEM image of the thermally conductive filler (A-4) used in the following Examples.

Description of Embodiments

Hereinafter, embodiments of the present invention will be described in detail.
Note that in the present specification and claims, the wording "A to B" indicating a numerical range represents A or more and B or less.

<<Composition>>

A composition according to an embodiment of the present invention (hereinafter, also referred to as the "present composition") includes

a thermally conductive filler (A) having a cumulative volume 50% particle diameter (D50(A)) of 0.05 $\mu$m or more and less than 1.0 $\mu$m and a cumulative volume 90% particle diameter (D90(A)) of 2.0 $\mu$m or less in a particle size distribution curve determined by laser diffractometry;
a thermally conductive filler (B); and
a binder component (C), wherein
the composition satisfies the following requirements (1) to (3):

requirement (1): in the entire thermally conductive filler (B) used in the present composition, a cumulative pore amount of pores with a pore diameter of 0.5 $\mu$m or less as calculated from a pore diameter distribution measured with a mercury porosimeter is 0.05 ml/g or less;
requirement (2): the entire thermally conductive filler (B) used in the present composition has a cumulative volume 50% particle diameter (D50(B)) of from 1.0 to 100 $\mu$m; and
requirement (3): the entire thermally conductive filler (B) used in the present composition has a cumulative volume 10% particle diameter (D10(B)) of 0.6 $\mu$m or more.

<<Filler Mixture>>

A filler mixture according to an embodiment of the present invention (hereinafter, also referred to as the "present mixture") includes

a thermally conductive filler (A) having a cumulative volume 50% particle diameter (D50(A)) of 0.05 $\mu$m or more and less than 1.0 $\mu$m and a cumulative volume 90% particle diameter (D90(A)) of 2.0 $\mu$m or less in a particle size distribution curve determined by laser diffractometry; and
a thermally conductive filler (B), wherein
the present mixture satisfies the following requirements (4) to (6):

requirement (4): in the entire thermally conductive filler (B) used in the present mixture, a cumulative pore amount of pores with a pore diameter of 0.5 μm or less as calculated from a pore diameter distribution measured with a mercury porosimeter is 0.05 ml/g or less;
requirement (5): the entire thermally conductive filler (B) used in the present mixture has a cumulative volume 50% particle diameter (D50(B)) of from 1.0 to 100 μm; and
requirement (6): the entire thermally conductive filler (B) used in the present mixture has a cumulative volume 10% particle diameter (D10(B)) of 0.6 μm or more.

The present mixture is preferably a mixture consisting of the thermally conductive filler (A) and the thermally conductive filler (B) and satisfying the requirements (4) to (6).

The present mixture preferably further contains the following binder component (C) and is used as a composition similar to the present composition.

The definitions of the thermally conductive fillers (A) and (B) in the present composition or the present mixture refer to, for example, the particle diameters and the pore amounts of the thermally conductive fillers (A) and (B) as raw materials used for preparing the present composition or the present mixture.

As used herein, the D10, D50, or D90 is a cumulative volume 10%, 50%, or 90% particle diameter, respectively, in a particle size distribution curve determined by laser diffractometry, and is specifically measured by the procedure described in the following Examples.

<Thermally Conductive Filler (A)>

The thermally conductive filler (A) is a filler having a cumulative volume 50% particle diameter (D50(A)) of 0.05 μm or more and less than 1.0 μm and a cumulative volume 90% particle diameter (D90(A)) of 2.0 μm or less in a particle size distribution curve determined by laser diffractometry.

One kind of the thermally conductive filler (A) may be used, or two or more kinds with, for instance, different types and particle diameters may be used.

The upper limit of the D50(A) is less than 1.0 μm, preferably less than 0.8 μm, more preferably less than 0.6 μm, and particularly preferably less than 0.4 μm, and the lower limit is 0.05 μm or more and preferably 0.1 μm or more.

The thermally conductive filler (A) having a D50(A) in the above range can sufficiently fill voids between the thermally conductive fillers (B), so that a composition, having high fluidity while having high thermal conductivity, can be easily obtained. In particular, the thermally conductive filler (A) having a D50(A) in the above range, further in the above particularly preferable range can sufficiently fill pores that can be present in the thermally conductive filler (B) with the thermally conductive filler (A) in the present composition satisfying the requirement (1), and can suppress a decrease in fluidity due to permeation of the binder component (C) into the pores. In addition, when D50(A) is the above lower limit or more, an increase in the viscosity of the composition due to the filler having a small particle diameter can be suppressed.

The upper limit of the D90(A) is 2.0 μm or less, preferably 1.5 μm or less, and more preferably 1.0 μm or less, and the lower limit is not particularly limited, but is D50 (A) [μm] or more.

It is considered that the thermally conductive filler (A) having a D90(A) in the above range has a small content of aggregates in which particles of the thermally conductive filler (A) are aggregated, and has a small content of coarse particles. Thus, the thermally conductive filler (A) having a D90(A) in the above range can be used to sufficiently fill voids between the thermally conductive fillers (B), so that a composition, having high fluidity while having high thermal conductivity, can be easily obtained.

The thermally conductive filler (A) preferably further satisfies one or more of the following requirements (a1) to (a5), and more preferably satisfies all the requirements.

[Requirement (a1)]

The cumulative volume 10% particle diameter (D10(A)) of the thermally conductive filler (A) is preferably 0.50 μm or less, more preferably 0.30 μm or less, and still more preferably 0.20 μm or less, and the lower limit is not particularly limited, but is, for example, 0.02 μm or more.

If the D10(A) falls within the above range, a composition, having high fluidity while having high thermal conductivity, can be easily obtained. In particular, the thermally conductive filler (A) having a D10(A) in the above range can sufficiently fill pores that can be present in the thermally conductive filler (B) with the thermally conductive filler (A) in the present composition satisfying the requirement (1), and can suppress a decrease in fluidity due to permeation of the binder component (C) into the pores. In addition, when the D10(A) is the above lower limit or more, an increase in the viscosity of the composition due to the filler having a small particle diameter can be suppressed.

[Requirement (a2)]

The ratio (SA/D90(A)) of a BET specific surface area SA [$m^2/g$] to the D90(A) [μm] of the thermally conductive filler (A) is preferably 4.0 or greater, more preferably 6.0 or greater, and still more preferably 30 or greater, and the upper limit is not particularly limited, but is, for example, 50 or less.
The thermally conductive filler (A) having an SA/D90(A) in the above range can sufficiently fill voids between the thermally conductive fillers (B), so that a composition, having high fluidity while having high thermal conductivity, can be easily obtained.
Specifically, the SA can be measured by the procedure described in the following Examples.

[Requirement (a3)]

The ratio (Y/D90(A)) of a density ratio Y, namely a ratio (pressurized bulk density/true density) of a pressurized bulk density [$g/cm^3$] to a true density [$g/cm^3$], to the D90(A) [μm] of the thermally conductive filler (A) is preferably 0.5 or greater, more preferably 0.6 or greater, and still more preferably 1.0 or greater, and the upper limit is not particularly limited, but is, for example, 4.0 or less.
The pressurized bulk density increases when the thermally conductive filler (A) has less aggregates and less non-uniform particles or crushed particles containing crushed powder. Thus, when a composition is prepared using the thermally conductive filler (A) having a high pressurized bulk density, a thermal path is easily formed in the composition. As described above, the smaller the content of aggregates, the smaller the value of D90(A). Therefore, Y/D90(A) is a parameter influenced by the particle shape, and when the thermally conductive filler (A) having a Y/D90(A) in the above range is used, a composition, having high fluidity while having high thermal conductivity, can be easily obtained.
Specifically, the pressurized bulk density can be measured by the procedure described in the following Examples.
Incidentally, the true density can be measured using a dry automatic densitometer (e.g., AccuPyc series manufactured by Shimadzu Corporation). In the present invention, depending on the type of filler, specifically, in the case of alumina, zinc oxide, magnesium oxide, titanium oxide, silicon nitride, aluminum nitride, boron nitride, aluminum hydroxide, magnesium hydroxide, silicon carbide, calcium carbonate, barium sulfate, talc, silica, or diamond, the following true density values are adopted:
alumina (3.98 $g/cm^3$), zinc oxide (5.67 $g/cm^3$), magnesium oxide (3.65 $g/cm^3$), titanium oxide (rutile type: 4.27 $g/cm^3$, anatase type: 3.91 $g/cm^3$), silicon nitride (3.17 $g/cm^3$), aluminum nitride (3.26 $g/cm^3$), boron nitride (h-BN: 2.27 $g/cm^3$, c-BN: 3.48 $g/cm^3$), aluminum hydroxide (2.42 $g/cm^3$), magnesium hydroxide (2.36 $g/cm^3$), silicon carbide (3.16 $g/cm^3$), calcium carbonate (calcite type: 2.71 $g/cm^3$, aragonite type: 2.93 $g/cm^3$), barium sulfate (4.50 $g/cm^3$), talc (2.7 $g/cm^3$), silica (2.17 $g/cm^3$), and diamond (3.52 $g/cm^3$).

[Requirement (a4)]

The ratio (Y/SA × D90(A)) of the density ratio Y to a product of the specific surface area SA [$m^2/g$] multiplied by the D90(A) [μm] of the thermally conductive filler (A) is preferably 0.05 or greater, more preferably 0.08 or greater, still more preferably 0.09 or greater, and particularly preferably 0.15 or greater, and the upper limit is not particularly limited, but is, for example, 0.4 or less.
As described above, the Y/D90 involves the shape of the thermally conductive filler (A). In addition, the SA × D90(A) is a parameter qualitatively representing the surface irregularities of the thermally conductive filler (A), and for example, the value of SA × D90(A) of non-uniform particles or crushed particles containing crushed powder tends to increase. Such non-uniform particles or crushed particles containing crushed powder are unlikely to uniformly fill voids between the thermally conductive fillers (B), and the thermal conductivity and fluidity thus tend to decrease. Therefore, Y/(SA × D90(A)) is a parameter influenced by the particle shape and the particle surface properties. Hence, when the thermally conductive filler (A) having a Y/(SA × D90(A)) in the above range is used, a composition, having high fluidity while having high thermal conductivity, can be easily obtained.

[Requirement (a5)]

The ratio (Y/(SA × (D90(A) - D50(A)))) of the density ratio Y to a product of the specific surface area SA [$m^2/g$] multiplied by a difference (D90(A) - D50(A)) between the D90(A) and the D50(A) of the thermally conductive filler (A) is preferably 0.08 or greater, more preferably 0.14 or greater, still more preferably 0.15 or greater, and particularly preferably 0.40 or greater, and the upper limit is not particularly limited, but is, for example, 0.80 or less.
It can be said that the smaller the (D90(A) - D50(A)), the sharper the particle size distribution curve (less aggregation). The SA × (D90(A) - D50(A)) is a parameter influenced by the particle diameter, the particle size distribution

(presence or absence of aggregation), and the particle surface properties. Therefore, Y/ (SA × (D90(A) - D50(A))) is a parameter that takes into consideration all of the particle diameter, the particle size distribution (presence or absence of aggregation), the particle shape, and the particle surface properties. When the thermally conductive filler (A) having a Y/ (SA × (D90(A) - D50(A))) in the above range is used, a composition, having high fluidity while having high thermal conductivity, can be easily obtained.

·Kind of Thermally Conductive Filler (A)

The kind of the thermally conductive filler (A) is not particularly limited, and examples thereof include alumina, zinc oxide, magnesium oxide, titanium oxide, silicon nitride, aluminum nitride, boron nitride, aluminum hydroxide, magnesium hydroxide, silicon carbide, calcium carbonate, barium sulfate, talc, silica, or diamond. As the thermally conductive filler (A), it is possible to use a filler obtained by combining a plurality of materials.

When the present composition or the present mixture is used as, for instance, a thermal interface material, the thermally conductive filler (A) is preferably alumina, silicon nitride, aluminum nitride, boron nitride, or diamond having high thermal conductivity. Alumina is more preferable from the viewpoint of easy handling and excellent cost performance.

The thermally conductive filler (A) may be a filler surface-treated with a surface treatment agent. As the surface treatment process, a known process can be adopted without particular limitation, and the surface treatment may be performed in a wet or dry manner.

As the surface treatment agent, for example, a known treatment agent such as a silane coupling agent can be used without particular limitation. Representative examples of the treatment agent include alkoxysilanes (e.g., methyltrimethoxysilane, dimethyldimethoxysilane, phenyltrimethoxysilane, methyltriethoxysilane, trifluoropropyltrimethoxysilane, phenyltriethoxysilane, hexyltrimethoxysilane, octyltriethoxysilane, decyltrimethoxysilane), silazanes (e.g., tetramethylsilazane, hexamethyldisilazane), or cyclic siloxanes (e.g., tetramethylcyclotetrasiloxane, octamethylcyclotetrasiloxane, hexamethylcyclotrisiloxane).

When the surface treatment agent is used, the amount thereof used is preferably from 0.01 to 2 parts by mass based on 100 parts by mass of the filler before surface treatment.

·Shape of Thermally Conductive Filler (A)

The shape of the thermally conductive filler (A) is not particularly limited, but is preferably a polyhedral spherical shape. Note that the polyhedral spherical shape refers to a particle in which the thermally conductive filler (A) has at least two planes and the shape and size of the particle observed in, for instance, a SEM image are substantially uniform. The particles mean particles other than spherical particles having no flat surface, non-uniform particles that are particles with various shapes and sizes as observed in, for instance, a SEM image, and crushed particles containing crushed powder (microparticles). For example, when alumina particles are used as the thermally conductive filler (A), AA series and NXA series, manufactured by Sumitomo Chemical Co., Ltd., which are polyhedral spherical fillers, are preferable. Among them, AA03F, NXA100, or NXA150 with less aggregation, for example, is more preferable.

When the thermally conductive filler (A) has a polyhedral spherical shape, a flat surface(s) exists on the particle surface, and the fillers can be in contact with each other via the flat surface portion. Thus, the contact area between the particles is larger than that between the particles in contact with each other at a point. This makes it easy to increase the thermal conductivity. Further, a composition, having high fluidity while having high thermal conductivity, can be easily obtained.

<Thermally Conductive Filler (B)>

The thermally conductive filler (B) is not particularly limited as long as the thermally conductive filler (B) used in the present composition or the present mixture as a whole satisfies the following requirements (1) to (3) or the following requirements (4) to (6).

One kind of the thermally conductive filler (B) may be used, or two or more kinds with, for instance, different types and particle diameters may be used.

The present composition satisfies the following requirement (1), and the present mixture satisfies the following requirement (4):

requirement (1): in the entire thermally conductive filler (B) used in the present composition, a cumulative pore amount of pores with a pore diameter of 0.5 μm or less as calculated from a pore diameter distribution measured with a mercury porosimeter is 0.05 ml/g or less; and

requirement (4): in the entire thermally conductive filler (B) used in the present mixture, a cumulative pore amount of pores with a pore diameter of 0.5 μm or less as calculated from a pore diameter distribution measured with a mercury

porosimeter is 0.05 ml/g or less.

The cumulative pore amount is preferably 0.04 ml/g or less and more preferably 0.03 ml/g or less, and the lower limit thereof is preferably 0 ml/g because the smaller, the better.

When the cumulative pore amount falls within the above range, pores that can be present in the thermally conductive filler (B) can be filled with the thermally conductive filler (A), and a decrease in fluidity due to permeation of, for example, the binder component (C) into the pores can be suppressed.

For example, in the present composition or the present mixture, $V_1$ vol% of thermally conductive filler (B) having pores with a pore diameter of 0.5 μm or less in a pore amount of y ml/g and a true density of $\rho_1$ g/cm$^3$ and $V_2$ vol% of thermally conductive filler (B) having pores with a pore diameter of 0.5 μm or less in a pore amount of z ml/g and a true density of $\rho_2$ g/cm$^3$ may be used. In this case, the cumulative pore amount is calculated by $(y \times V_1 \times \rho_1 + z \times V_2 \times \rho_2) / (V_1 \times \rho_1 + V_2 \times \rho_2)$. Substantially the same calculation applies to the case where the present composition or the present mixture uses three or more kinds of thermally conductive fillers (B) having different pore amounts of pores with a pore diameter of 0.5 μm or less.

The present composition satisfies the following requirement (2), and the present mixture satisfies the following requirement (5):

requirement (2): the entire thermally conductive filler (B) used in the present composition has a cumulative volume 50% particle diameter (D50(B)) of from 1.0 to 100 μm; and
requirement (5): the entire thermally conductive filler (B) used in the present mixture has a cumulative volume 50% particle diameter (D50(B)) of from 1.0 to 100 μm.

The D50(B) pertaining to the requirements (2) and (5) is preferably 3.0 μm or larger and more preferably 6.0 μm or larger, and preferably 90 μm or less and more preferably 80 μm or less from the viewpoint of, for example, easily obtaining a composition having high thermal conductivity.

When two or more kinds of thermally conductive fillers (B) having different particle diameters are used in the present composition or the present mixture, the D50(B) of the entire thermally conductive filler (B) used in the present composition or the present mixture is a cumulative volume 50% particle diameter in the particle size distribution data of the entire thermally conductive filler (B) as prepared by adding the apparent particle size distribution obtained by multiplying respective raw data of the particle size distribution of each filler used as the thermally conductive filler (B) by the blending ratio (vol%) of the filler.

The present composition satisfies the following requirement (3), and the present mixture satisfies the following requirement (6):

requirement (3): the entire thermally conductive filler (B) used in the present composition has a cumulative volume 10% particle diameter (D10(B)) of 0.6 μm or more; and
requirement (6): the entire thermally conductive filler (B) used in the present mixture has a cumulative volume 10% particle diameter (D10(B)) of 0.6 μm or more.

The lower limit of D10(B) pertaining to the requirements (3) and (6) is preferably 0.8 μm or larger and more preferably 1.0 μm or larger, and the upper limit is usually 30 μm or less, preferably 20 μm or less, and more preferably 10 μm or less.

When the D10(B) of the entire thermally conductive filler (B) used in the present composition or the present mixture falls within the above range, it is possible to sufficiently exhibit further fluidity and an effect of improving the thermal conductivity when the thermally conductive filler (A) is added while ensuring the thermal conductivity and fluidity by closest packing.

When two or more kinds of thermally conductive fillers (B) having different particle diameters are used in the present composition or the present mixture, the D10(B) of the entire thermally conductive filler (B) used in the present composition or the present mixture is calculated from particle size distribution data of the entire thermally conductive filler (B). How to create the particle size distribution data of the entire thermally conductive filler (B) is similar to that of D50(B).

The kind of the thermally conductive filler (B) is not particularly limited, and examples thereof include alumina, zinc oxide, magnesium oxide, titanium oxide, silicon nitride, aluminum nitride, boron nitride, aluminum hydroxide, magnesium hydroxide, silicon carbide, calcium carbonate, barium sulfate, talc, silica, or diamond. As the thermally conductive filler (B), it is possible to use a filler obtained by combining a plurality of materials.

When the present composition or the present mixture is used as, for instance, a thermal interface material, the thermally conductive filler (B) is preferably alumina, silicon nitride, aluminum nitride, boron nitride, or diamond having high thermal conductivity. More preferred is alumina or aluminum nitride.

The thermally conductive filler (B), like the thermally conductive filler (A), may be a filler surface-treated with a

surface treatment agent. The process of surface treatment, the type of surface treatment agent, the amount of the surface treatment agent used, for example, are similar to those described in the section of the thermally conductive filler (A).

The shape of the thermally conductive filler (B) is not particularly limited. From the viewpoint of fluidity, a true spherical shape, a polyhedral spherical shape, an ellipsoidal shape, or a rounded shape is more preferable. In order to increase the thermal conductivity, an agglomerated, crushed, non-uniform, or plate-shaped filler may be used.

<Binder Component (C)>

Specific examples of the binder component (C) include a component obtained by optionally blending a resin with an additive(s).

One kind or two or more kinds of the binder component (C) may be used.

Examples of the additive(s) include curing agents, plasticizers, affinity agents, curing accelerators, discoloration inhibitors, surfactants, dispersants, coupling agents, colorants, viscosity modifiers, or antibacterial agents. Each of the additives contained in the binder component (C) may be one kind or two or more kinds.

The resin is not particularly limited, and examples thereof include a silicone resin, an epoxy resin, an acrylic resin, a urethane resin, a phenol resin, a curable polyimide resin, a curable modified PPE, or a curable PPE. One kind or two or more kinds of resin contained in the binder component (C) may be used.

The content of the resin in the binder component (C) is usually from 50 to 100 vol% and more preferably from 60 to 95 vol% from the viewpoint of mechanical properties of the present composition, durability when the present composition is used as a thermal interface material, and others.

The resin is preferably a silicone resin from the viewpoint that a composition excellent in heat resistance, for example, can be easily obtained. The silicone resin may be a curable silicone resin or a non-curable silicone resin.

Examples of the curable silicone resin include an adduct type silicone resin or a condensed silicone resin. When a hydrolyzable filler such as aluminum nitride is used as the thermally conductive filler (A) or the thermally conductive filler (B), it is desirable to use an adduct type silicone resin.

Examples of the adduct type silicone resin include a resin obtained by crosslinking an alkenyl group-containing polyorganosiloxane (a) and a hydrosilyl group-containing polyorganosiloxane (b) by a hydrosilylation reaction using a catalyst (c).

Meanwhile, it is also possible to use, as the silicone resin, a compound selected from the group consisting of an alkoxysilyl group-containing compound and dimethylpolysiloxane.

·Alkenyl group-containing polyorganosiloxane (a)

Examples of the alkenyl group-containing polyorganosiloxane (a) include a polyorganosiloxane represented by the average composition formula $R^x_jR^y_kSiO_{[4 - (j + k)]/2}$.

One kind or two or more kinds of the polyorganosiloxane (a) may be used.

$R^x$ is an alkenyl group. The alkenyl group is preferably a group having 2 to 8 carbon atoms. Examples thereof include a vinyl group, an allyl group, a 1-butenyl group, or a 1-hexenyl group. Preferred is a vinyl group.

The number of alkenyl groups per molecule of the polyorganosiloxane is preferably 1 or more and more preferably 2 or more.

In addition, the alkenyl group may be bonded to a silicon atom at a molecular chain terminal, bonded to a silicon atom in the middle of the molecular chain, or bonded to both. However, from the viewpoint of, for instance, the curing rate in the case of curing the present composition and the physical properties of the cured product to be produced as described below, it is preferable that the alkenyl group is bonded to at least a silicon atom at a molecular chain terminal, particularly a silicon atom at each of both molecular chain terminals.

$R^y$ is a substituted or unsubstituted monovalent hydrocarbon group without any aliphatic unsaturated bond.

The number of carbon atoms in $R^y$ is preferably from 1 to 12 and more preferably from 1 to 10.

Examples of $R^y$ include an alkyl group (e.g., a methyl group, an ethyl group, a propyl group, an isopropyl group, a butyl group, a hexyl group, an octyl group, a decyl group, a dodecyl group); a cycloalkyl group (e.g., a cyclopentyl group, a cyclohexyl group, a cyclobutyl group); an aryl group (e.g., a phenyl group, a tolyl group, a xylyl group, a naphthyl group); an aralkyl group (e.g., a benzyl group, a phenylethyl group, a phenylpropyl group); or a group, in which some or all of hydrogen atoms thereof are substituted with, for instance, a halogen atom (e.g., chlorine, fluorine, bromine) or a cyano group, such as a halogenated hydrocarbon group (e.g., a chloromethyl group, a trifluoropropyl group, a chlorophenyl group, a bromophenyl group, a dibromophenyl group, a tetrachlorophenyl group, a fluorophenyl group, a difluorophenyl group) or a cyanoalkyl group (e.g., an $\alpha$-cyanoethyl group, a $\beta$-cyanopropyl group, a $\gamma$-cyanopropyl group). Among them, preferred is an alkyl group or an aryl group, and more preferred is a methyl group or a phenyl group.

Here, j and k are positive numbers satisfying $0 < j < 3$, $0 < k < 3$, and $1 < j + k < 3$, preferably $0.0005 \leq j \leq 1$, $1.5 \leq k < 2.4$, and $1.5 < j + k < 2.5$, and more preferably $0.001 \leq j \leq 0.5$, $1.8 \leq k \leq 2.1$, and $1.8 < j + k \leq 2.2$.

The molecular structure of the polyorganosiloxane (a) may be linear, branched, cyclic, or three-dimensional network, and the polyorganosiloxane (a) may be a mixture thereof.

The viscosity of the polyorganosiloxane (a) at 23°C is preferably from 0.1 to 10 Pa·s from the viewpoint of, for example, being able to obtain a composition having desired physical properties with good workability.

·Hydrosilyl group-containing polyorganosiloxane (b)

Examples of the hydrosilyl group-containing polyorganosiloxane (b) include a polyorganosiloxane represented by the average composition formula $R^z{}_mH_nSiO_{[4 - (m + n)]/2}$.

One kind or two or more kinds of the polyorganosiloxane (b) may be used.

$R^z$ is a substituted or unsubstituted monovalent hydrocarbon group without any aliphatic unsaturated bond.

Examples of $R^z$ include an alkyl group (e.g., a methyl group, an ethyl group, a propyl group, an isopropyl group, a butyl group, an isobutyl group, a tert-butyl group, a hexyl group, a cyclohexyl group, an octyl group); an aryl group (e.g., phenyl group, tolyl group); an aralkyl group (e.g., a benzyl group, a phenylethyl group); or a group, in which some or all of hydrogen atoms thereof are substituted with, for instance, a halogen atom (e.g., fluorine, chlorine, bromine) or a cyano group, such as a chloromethyl group, a bromoethyl group, a trifluoropropyl group, or a cyanoethyl group. Among them, an alkyl group is preferable, and a methyl group is more preferable from the viewpoint of, for instance, ease of synthesis and cost performance.

Here, m and n are numbers that satisfy $0.5 \leq m \leq 2$, $0 < n \leq 2$ and $0.5 < m + n \leq 3$, and preferably $0.6 \leq m \leq 1.9$, $0.01 \leq n \leq 1.0$ and $0.6 < m + n \leq 2.8$.

The amount of the polyorganosiloxane (b) used is an amount such that the number of hydrogen atoms bonded to a silicon atom is from 0.1 to 2.0 and preferably from 0.2 to 1.5 per alkenyl group bonded to a silicon atom of the polyorganosiloxane (a) from the viewpoint of, for example, easily obtaining a composition having desired physical properties with the physical properties hardly changing with time.

·Catalyst (c)

As the catalyst (c), it is possible to use, for example, a known platinum catalyst used for curing a silicone resin without limitation.

Examples of the catalyst (c) include platinum black, secondary platinum chloride, chloroplatinic acid, a reaction product of chloroplatinic acid and monohydric alcohol, a complex of chloroplatinic acid and an olefin compound or vinylsiloxane, or platinum bisacetoacetate.

One kind or two or more kinds of the catalyst (c) may be used.

The amount of the catalyst (c) used in terms of platinum element may be an amount required for curing and may be adjusted, if appropriate, according to, for instance, a desired curing rate, and is usually preferably from 0.1 to 1000 ppm based on 100 parts by mass of the total of the polyorganosiloxanes (a) and (b).

·Alkoxysilyl group-containing compound

As the alkoxysilyl group-containing compound, it is preferable, from the viewpoint of being able to, for instance, easily obtain a composition with excellent workability, to use, per molecule, a compound having at least an alkoxysilyl group represented by the following formula (I):

$$-SiR^{11}{}_{3-z}(OR^{12})_z \qquad (I)$$

wherein $R^{11}$ is a $C_{1-6}$ alkyl group and preferably a methyl group, $R^{12}$ is a $C_{1-6}$ alkyl group and preferably a methyl group, and z is 1, 2, or 3.

Examples of the alkoxysilyl group-containing compound represented by the above formula (I) include a compound represented by the following formula (1).

Note that in the following formula (1), the repeating unit with the number of repeating units a, the repeating unit with the number of repeating units b, and the repeating unit with the number of repeating units c are not necessarily arranged as shown in the following formula (1).For example, the repeating unit with the number of repeating units c may be present between the repeating unit with the number of repeating units a and the repeating unit with the number of repeating units b.

[Chemical Formula 1]

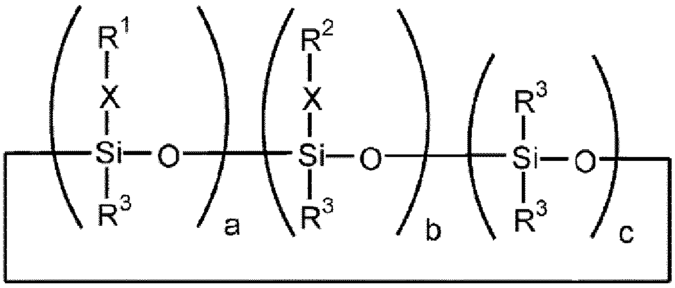

(1)

wherein $R^1$ is a $C_{1-4}$ alkoxysilyl group-containing group, $R^2$ is a group having a siloxane unit represented by the following formula (2) or a $C_{6-18}$ monovalent hydrocarbon group, $R^3$ moieties are each independently a $C_{1-6}$ monovalent hydrocarbon group or a hydrogen atom, each X is independently a $C_{2-10}$ divalent hydrocarbon group or an ester bond-containing $C_{2-10}$ group, a and b are each independently an integer of 1 or more, c is an integer of 0 or more, and a + b + c is an integer of 4 or more.

[Chemical Formula 2]

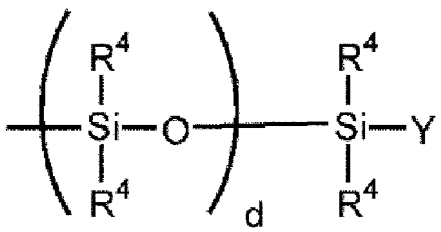

(2)

wherein $R^4$ moieties are each independently a $C_{1-12}$ monovalent hydrocarbon group, Y is a $C_{1-4}$ alkoxysilyl group-containing group or an aliphatic unsaturated group, and d is an integer of 2 to 500, preferably an integer of 4 to 400, more preferably an integer of 10 to 200, and particularly preferably an integer of 10 to 60.

Examples of the alkoxysilyl group-containing compound include a compound represented by the following formula (3):

$$R^{21}_{e}R^{22}_{f}Si(OR^{23})_{4-(e+f)} \quad (3)$$

wherein $R^{21}$ moieties are each independently a $C_{6-15}$ alkyl group, $R^{22}$ moieties are each independently an unsubstituted or substituted $C_{1-12}$ monovalent hydrocarbon group (excluding a $C_{6-12}$ alkyl group), $R^{23}$ moieties are each independently a $C_{1-6}$ alkyl group, e is an integer of 0 to 3 and preferably 1, f is an integer of 0 to 2, and e + f is an integer of 1 to 3.

Examples of $R^{21}$ include a hexyl group, an octyl group, a nonyl group, a decyl group, a dodecyl group, or a tetradecyl group. When the number of carbon atoms of the alkyl group of $R^{21}$ is from 6 to 15, the alkoxysilyl group-containing compound becomes a liquid at normal temperature and is easy to handle, and wettability with the thermally conductive fillers (A) and (B) tends to be favorable and thus preferable.

Examples of $R^{22}$ include an alkyl group (e.g., a methyl group, an ethyl group, a propyl group, an isopropyl group, a butyl group, an isobutyl group, a tert-butyl group); a cycloalkyl group (e.g., a cyclopentyl group, a cyclohexyl group, a cyclobutyl group); an aliphatic unsaturated group (e.g., a vinyl groups, an allyl group); an aryl group (e.g., a phenyl group, a tolyl group, a xylyl group, a naphthyl group); an aralkyl group (e.g., a benzyl group, a 2-phenylethyl group, a 2-methyl-2-phenylethyl group, a phenylpropyl group); or a group, in which some or all of hydrogen atoms of each hydrocarbon group are substituted with, for instance, a halogen atom (e.g., chlorine, fluorine, bromine) or a cyano group, such as a halogenated hydrocarbon group (e.g., a chloromethyl group, a trifluoropropyl group, a 3,3,3-trifluoropropyl group, a 2-(nonafluorobutyl)ethyl group, a 2-(heptadecafluorooctyl)ethyl group, a chlorophenyl group, a bromophenyl group, a dibromophenyl group, a tetrachlorophenyl group, a fluorophenyl group, a difluorophenyl group) or a cyanoalkyl group (e.g., an α-cyanoethyl group, a β-cyanopropyl group, a γ-cyanopropyl group).Preferred is a methyl group or an ethyl group.

Examples of $R^{23}$ include a methyl group, an ethyl group, a propyl group, a butyl group, a pentyl group, or a hexyl group. Preferred is a methyl group or an ethyl group.

Examples of the compound in which e is 1 in the formula (3) include $C_6H_{13}Si(OCH_3)_3$, $C_{10}H_{21}Si(OCH_3)_3$, $C_{12}H_{25}Si(OCH_3)_3$, $C_{12}H_{25}Si(OC_2H_5)_3$, $C_{10}H_{21}Si(CH_3)(OCH_3)_2$, $C_{10}H_{21}Si(C_6H_5)(OCH_3)_2$, $C_{10}H_{21}Si(CH_3)(OC_2H_5)_2$, $C_{10}H_{21}Si(CH = CH_2)(OCH_3)_2$, or $C_{10}H_{21}Si(CH_2CH_2CF_3)(OCH_3)_2$.

Examples of the alkoxysilyl group-containing compound include dimethylpolysiloxane in which one molecular chain terminal is capped with an alkoxysilyl group as represented by the following formula (4):

[Chemical Formula 3]

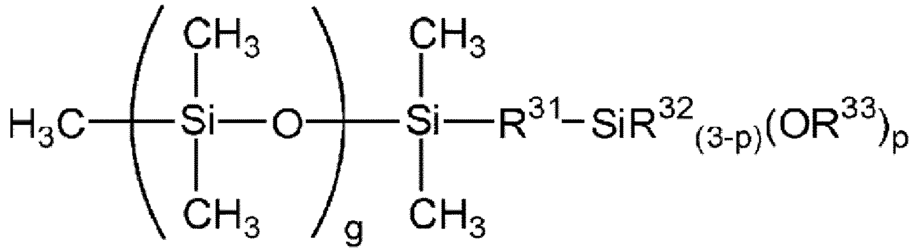

(4)

wherein $R^{31}$ is -O- or $-CH_2CH_2-$; $R^{32}$ moieties are each independently an unsubstituted or substituted monovalent hydrocarbon group, and specific examples thereof include similar group to each group exemplified for $R^{22}$ in the above formula (3), and among them, an alkyl group or an aryl group is preferable, and a methyl group or a phenyl group is more preferable; $R^{33}$ moieties are each independently a $C_{1-6}$ alkyl group and preferably a methyl group, an ethyl group, a propyl group, a butyl group, or a hexyl group; g is an integer of 5 to 100, preferably an integer of 5 to 70, and particularly preferably an integer of 10 to 50; and p is an integer of 1 to 3 and preferably 2 or 3.

Note that examples of the alkoxysilyl group-containing compound include a compound in which one or more methyl groups in the formula (4) are substituted with a monovalent hydrocarbon group other than a methyl group.

Examples of the substituent include a $C_{1-10}$ group. Specific examples thereof include an alkyl group (e.g., an ethyl group, a propyl group, a butyl group, a hexyl group, an octyl group); a cycloalkyl group (e.g., a cyclopentyl group, a cyclohexyl group); an aryl group (e.g., phenyl group, tolyl group); an aralkyl group (e.g., a 2-phenylethyl group, a 2-methyl-2-phenylethyl group); or a halogenated hydrocarbon group (e.g., a 3,3,3-trifluoropropyl group, a 2-(nonafluorobutyl)ethyl group, a 2-(heptadecafluorooctyl)ethyl group, a p-chlorophenyl group).

Examples of the alkoxysilyl group-containing compound include dimethylpolysiloxane in which both molecular chain terminals are each capped with an alkoxysilyl group as represented by the following formula (5):

[Chemical Formula 4]

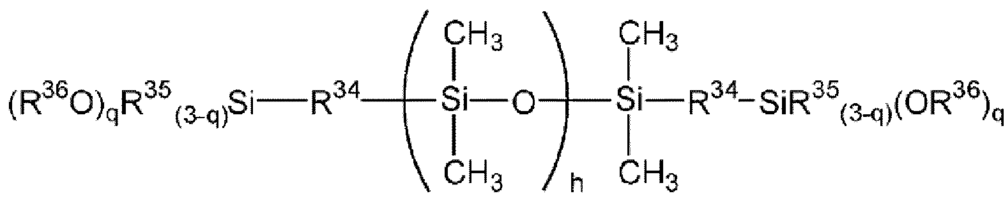

(5)

wherein $R^{34}$, $R^{35}$, $R^{36}$, and q are each independently synonymous with $R^{31}$, $R^{32}$, $R^{33}$, and p, respectively, in the formula (4), and h is an integer set such that the viscosity [viscosity measured under conditions at 23°C while using a rotational viscometer in accordance with JIS K 6249: 2003] of the compound represented by the formula (5) under conditions at 23°C is from 10 to 10,000 mPa·s and more preferably from 20 to 5,000 mPa·s.

Note that examples of the alkoxysilyl group-containing compound include a compound in which one or more methyl groups in the formula (5) are substituted with a monovalent hydrocarbon group other than a methyl group.

Examples of the substituent include similar group to each group exemplified as the substituent capable of substituting the methyl group in the formula (4).

Examples of the dimethylpolysiloxane represented by the formula (5) in which both molecular chain terminals are each capped with an alkoxysilyl group include dimethylpolysiloxane having a methyldimethoxy group at each terminal or dimethylpolysiloxane having a trimethoxy group at each terminal.

·Dimethylpolysiloxane

Examples of the dimethylpolysiloxane include linear dimethylpolysiloxane represented by the following formula (6):

[Chemical Formula 5]

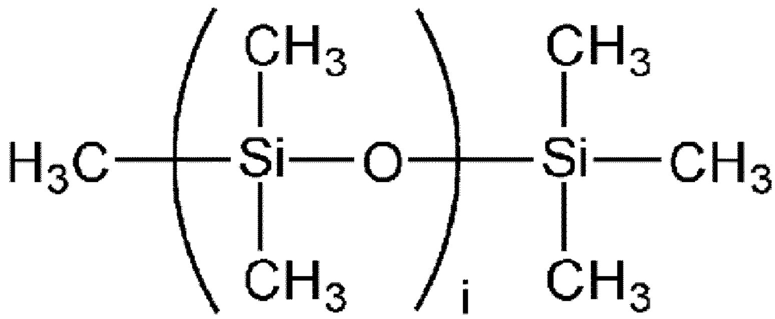

(6)

wherein i is an integer set such that the viscosity [viscosity measured under conditions at 23°C while using a rotational viscometer in accordance with JIS K 6249: 2003] of the compound represented by the formula (6) under conditions at 23°C is from 10 to 10,000 mPa·s and more preferably from 20 to 5,000 mPa·s.

Note that examples of the dimethylpolysiloxane include a compound in which one or more methyl groups in the formula (6) are substituted with a monovalent hydrocarbon group other than a methyl group. Provided that the substituted compound has at least one $-(Si(CH_3)_2-O)-$ structure.

Examples of the substituent include similar group as each group exemplified as the substituent capable of substituting the methyl group in the formula (4).

The alkoxysilyl group-containing compound and/or the dimethylpolysiloxane may be used together with the polyorganosiloxane (a), the polyorganosiloxane (b), and/or the catalyst (c).

<Composition of Present Composition or Present Mixture>

The amounts of the thermally conductive filler (A), the thermally conductive filler (B), and the binder component (C) blended in the present composition are preferably in the following ranges. The amounts of the thermally conductive filler (A) and the thermally conductive filler (B) blended in the present mixture are preferably in the following ranges.

From the viewpoints that voids between the thermally conductive fillers (B) can be sufficiently filled, and further, pores that may be present in the thermally conductive filler (B) can be sufficiently filled with the thermally conductive filler (A), and a composition, having high fluidity while having high thermal conductivity, can be easily obtained, for instance, the amount of the thermally conductive filler (A) blended in the present composition is preferably 1 vol% or larger, more preferably 2 vol% or larger, and still more preferably 3 vol% or larger, and preferably 45 vol% or less, more preferably 40 vol% or less, and still more preferably 30 vol% or less based on 100 vol% of the total of the thermally conductive filler (A), the thermally conductive filler (B), and the binder component (C).

From the viewpoints that voids between the thermally conductive fillers (B) can be sufficiently filled, and further, pores that may be present in the thermally conductive filler (B) can be sufficiently filled with the thermally conductive filler (A), and a composition, having high fluidity while having high thermal conductivity, can be easily obtained, for instance, the amount of the thermally conductive filler (A) blended in the present mixture is preferably 2 vol% or larger, more preferably 3 vol% or larger, and still more preferably 4 vol% or larger, and preferably 55 vol% or less, more preferably 45 vol% or less, and still more preferably 35 vol% or less based on 100 vol% of the total of the thermally conductive filler (A) and the thermally conductive filler (B).

Form the viewpoints that a composition, having high fluidity while having high thermal conductivity, can be easily obtained, for instance, the amount of the thermally conductive filler (B) blended in the present composition is usually 25 vol% or larger, preferably 30 vol% or larger, and more preferably 35 vol% or larger, and usually 90 vol% or less, preferably 85 vol% or less, and more preferably 80 vol% or less based on 100 vol% of the total of the thermally conductive filler (A), the thermally conductive filler (B), and the binder component (C).

From the viewpoints that the layer obtained from the present composition can sufficiently hold the thermally conductive fillers (A) and (B), for instance, the amount of the binder component (C) blended in the present composition is usually 3 vol% or larger, preferably 5 vol% or larger, and more preferably 7 vol% or larger, and usually 40 vol% or less, preferably 37 vol% or less, and more preferably 30 vol% or less based on 100 vol% of the total of the thermally conductive filler (A), the thermally conductive filler (B), and the binder component (C).

<How to Prepare Present Composition or Present Mixture>

The present composition may be prepared by mixing the thermally conductive filler (A), the thermally conductive

filler (B), and the binder component (C) by a conventionally known procedure. The present mixture may be prepared by mixing the thermally conductive filler (A) and the thermally conductive filler (B), and optionally the binder component (C) by a conventionally known procedure.

The mixing procedure is not particularly limited, and can be performed using a general mixer such as a planetary mixer, a kneader (e.g., a trimix kneader), or a roll kneader (e.g., a three-roll kneader).

Meanwhile, at the time of the mixing, the respective components may be simultaneously admixed in, for instance, a mixer, or the respective components may be sequentially admixed in, for instance, a mixer. The order of addition at this time is not particularly limited.

Further, the mixing may be optionally performed under heating, or may be performed under an adjusted atmosphere such as an inert gas atmosphere.

<Present Composition Applications and Others>

Examples of an application of the present composition include a thermal interface material for efficiently dissipating heat generated from semiconductor components mounted on, for example, home electric appliances, automobiles, and (notebook) personal computers. Specific examples thereof include heat dissipation grease, heat dissipation gel, adhesive, semiconductor sealant, or underfill.

The present composition is also suitably used for electric and electronic devices. The electric and electronic device are not particularly limited. Example thereof include: a secondary battery (e.g., a cell type lithium ion electrode secondary battery, a cell stack type fuel cell); an electronic circuit board (e.g., a printed circuit board); a PC/server equipped with a CPU that generates a large amount of heat as well as each electronic device mounted with a power module, a VLSI, and/or an optical component (e.g., an optical pickup, an LED, an organic EL, a laser diode, an LED array); a CPU used for home appliances (electronic devices such as a digital video disk, a mobile phone, a smartphone, a home game machine); or industrial equipment (e.g., an inverter, a switching power supply). In particular, in a high-performance digital switching circuit formed with a high integrated density, heat removal (heat dissipation) is a major factor for the performance and reliability of the integrated circuit. Meanwhile, the present composition has excellent heat dissipation and excellent handling workability when applied to power semiconductor applications for engine control, powertrain system, air conditioner control, and others in a transport machine, and can realize excellent thermal conductivity when used under a severe environment by being incorporated in an in-vehicle electronic component such as an electronic control unit (ECU).

The present composition can be in the form of, for instance, grease (paste), gel, or rubber.

For example, when the present composition is used between a heat generator (e.g., a device) and a heat dissipation member (e.g., a heat sink), the present composition may be used as it is between the heat generator and the heat dissipation member. In a case which the binder component (C) contain a curable resin, a cured material made by curing the present composition may be used between the heat generator and the heat dissipation member. In the latter case, the present composition may be disposed between the heat generator and the heat dissipation member, and the present composition may then be cured. Alternatively, the present composition may be cured, and the resulting cured material may be disposed between the heat generator and the heat dissipation member.

As the present composition has excellent fluidity, even if small gaps and/or irregularities are present between the heat generator and the heat dissipation member, the gaps and/or irregularities can be filled with the present composition. As a result, a member excellent in heat dissipation can be easily obtained. As the cured material of the present composition is also excellent in fluidity (flexibility, object followability), even when the cured material is used, the gaps and/or irregularities can be filled with the cured material. Therefore, a member excellent in heat dissipation can thus be easily obtained. Examples

Hereinafter, the present invention will be further described in more detail by referring to Examples.

<Raw Materials>

In Examples and Comparative Examples, the following thermally conductive fillers (A-1) to (A-4), thermally conductive fillers (cA-1) to (cA-2), thermally conductive fillers (B-1) to (B-8), and binder components (C-1) to (C-2) were used as raw materials.

<Thermally Conductive Fillers (A-1) to (A-4) and Thermally Conductive Fillers (cA-1) to (cA-2)>

In Examples and Comparative Examples, the following thermally conductive fillers (A-1) to (A-4) and thermally conductive fillers (cA-1) to (cA-2) were used. Note that physical properties of these fillers were measured by the following procedure. Table 1 shows the results. Note that the particle shape of each filler was observed under a scanning electron microscope (SEM) (S-5500, manufactured by Hitachi High-Tech Corporation).

- ·"Thermally conductive filler (A-1)": alumina powder AA03F (manufactured by Sumitomo Chemical Co., Ltd.; particle shape: polyhedral spherical shape (shape shown in Fig. 1))
- ·"Thermally conductive filler (A-2)": alumina powder NAX150 (manufactured by Sumitomo Chemical Co., Ltd.; particle shape: polyhedral spherical shape)
- ·"Thermally conductive filler (A-3)": alumina powder AKP30 (manufactured by Sumitomo Chemical Co., Ltd.; particle shape: non-uniform shape (shape shown in Fig. 2))
- ·"Thermally conductive filler (A-4)": alumina powder ASFP20 (manufactured by Denka Company Limited; particle shape: spherical shape without any plane (shape shown in Fig. 3))
- ·"Thermally conductive filler (cA-1)": alumina powder AA03 (manufactured by Sumitomo Chemical Co., Ltd.; particle shape: polyhedral spherical shape)
- ·"Thermally conductive filler (cA-2)": alumina powder prepared by Tokuyama Corporation. (particle shape: polyhedral spherical shape)

[Particle Size Distribution]

First, 50 mg of each of the fillers was added to a solution obtained by adding 5 ml of 5% sodium pyrophosphate aqueous solution to 90 ml of water, and the mixture was dispersed using a homogenizer for 3 minutes at an output of 200 mA to obtain a sample. The particle size distribution of the obtained sample was measured using a laser diffraction particle size distribution analyzer (MICROTRACK-MT 3300 EXII, manufactured by MicrotracBEL Corp.). D10, D50 and D90 of each filler were determined from the obtained particle size distribution curve.

[BET Specific Surface Area]

The specific surface area of each filler was determined by the BET method using $N_2$ adsorption using a flowable automatic surface area meter (FlowSorb 2300, manufactured by Shimadzu Corporation).

[Pressurized Bulk Density]

First, 1.5 g of a filler to be measured was weighed and put into a mold having a φ 20 mm hole diameter and including an upper punch, a lower punch, and a die, and pressurized at 200 kgf/$cm^2$ for 1 minute to prepare a pressed body. The mass (w) of the obtained pressed body was recorded up to four decimal places while using a precision balance. In addition, on the circular surface of the pressed body, the thicknesses (t1 and t2) of the pressed body were measured in units of 1 μm by using a micrometer at two points that are near both ends of the circular surface and on a straight line passing through the center of the circle. Thereafter, the pressed body mass (w) [g] and the thicknesses (t1 and t2) [mm] were used to calculate the pressurized bulk density from the following formula:

Pressurized bulk density [g/$cm^3$] = $20 \times w/((t1 + t2) \times \pi)$.

[True Density]

The true density of each of the fillers (A-1) to (A-4), (cA-1), and (cA-2) was set to 3.98 [g/$cm^3$].

[Table 1]

| | D10 [μm] | D50 [μm] | D90 [μm] | BET specific surface area (SA) [$m^2$/g] | Pressurized bulk density (X) [g/$cm^3$] | Bulk density/True density (Y) | SA/D90 | Y/D90 | SA × D90 | Y/(SA × D90) | Y/(SA × (D90 - D50)) |
|---|---|---|---|---|---|---|---|---|---|---|---|
| Thermally conductive filler (A-1) | 0.18 | 0.37 | 0.95 | 6.34 | 2.36 | 0.59 | 6.65 | 0.62 | 6.0 | 0.10 | 0.16 |
| Thermally conductive filler (A-2) | 0.10 | 0.18 | 0.29 | 9.78 | 2.18 | 0.55 | 34.20 | 1.92 | 2.8 | 0.20 | 0.52 |

(continued)

| | D10 [μm] | D50 [μm] | D90 [μm] | BET specific surface area (SA) [$m^2$/g] | Pressurized bulk density (X) [g/$cm^3$] | Bulk density/True density (Y) | SA/D90 | Y/D90 | SA × D90 | Y/(SA × D90) | Y/(SA × (D90 - D50)) |
|---|---|---|---|---|---|---|---|---|---|---|---|
| Thermally conductive filler (A-3) | 0.15 | 0.34 | 1.11 | 7.60 | 2.10 | 0.53 | 6.86 | 0.48 | 8.4 | 0.06 | 0.09 |
| Thermally conductive filler (A-4) | 0.31 | 0.54 | 0.93 | 10.8 | 1.85 | 0.47 | 11.63 | 0.50 | 10.0 | 0.05 | 0.11 |
| Thermally conductive filler (cA-1) | 0.30 | 0.66 | 7.84 | 5.48 | 2.02 | 0.51 | 0.70 | 0.06 | 42.9 | 0.01 | 0.01 |
| Thermally conductive filler (cA-2) | 0.19 | 0.40 | 2.10 | 5.94 | 2.20 | 0.55 | 2.83 | 0.26 | 12.5 | 0.04 | 0.05 |

<Thermally Conductive Fillers (B-1) to (B-8)>

In Examples and Comparative Examples, the following thermally conductive fillers (B-1) to (B-8) were used. Note that D10 and D50 of these fillers were measured in the same manner as for the thermally conductive filler (A), and the pore amount of pores with a pore diameter of 0.5 μm or less was measured by the following procedure.

- "Thermally conductive filler (B-1)": aluminum nitride powder (D10 = 0.6 μm, D50 = 1 μm, pore amount of pores with a pore diameter of 0.5 μm or less = 0.07 ml/g)
- "Thermally conductive filler (B-2)": aluminum nitride powder (D10 = 2.2 μm, D50 = 9 μm, pore amount of pores with a pore diameter of 0.5 μm or less = 0.01 ml/g)
- "Thermally conductive filler (B-3)": aluminum nitride powder (D10 = 19.4 μm, D50 = 30 μm, pore amount of pores with a pore diameter of 0.5 μm or less = 0.00 ml/g)
- "Thermally conductive filler (B-4)": aluminum nitride powder (D10 = 78.9 μm, D50 = 120 μm, pore amount of pores with a pore diameter of 0.5 μm or less = 0.00 ml/g)
- "Thermally conductive filler (B-5)": aluminum nitride powder (D10 = 0.6 μm, D50 = 1 μm, pore amount of pores with a pore diameter of 0.5 μm or less = 0.43 ml/g)
- "Thermally conductive filler (B-6)": alumina powder (D10 = 0.5 μm, D50 = 1 μm, pore amount of pores with a pore diameter of 0.5 μm or less = 0.05 ml/g)
- "Thermally conductive filler (B-7)": alumina powder (D10 = 4.7 μm, D50 = 13 μm, pore amount of pores with a pore diameter of 0.5 μm or less = 0.00 ml/g)
- "Thermally conductive filler (B-8)": alumina powder (D10 = 48 μm, D50 = 75 μm, pore amount of pores with a pore diameter of 0.5 μm or less = 0.00 ml/g)

[To Measure Pore Amount of Pores]

As pretreatment, the filler to be measured was subjected to constant-temperature drying at 120°C for 4 hours. Next, the distribution of pores with a pore diameter of about 0.0036 to 200 μm was determined by a mercury intrusion method using a mercury porosimeter (Autopore V 9620, manufactured by Micromeritics Instrument Corporation). The pore diameter was calculated using Washburn's equation. The pore amount of pores with a pore diameter of 0.5 μm or less is a value obtained per 1 g of filler by totaling the volumes of pores with a pore diameter of 0.5 μm or less as calculated as described above.

$$\text{Washburn's equation: } P \times D = -4\sigma\cos\theta$$

[P is a pressure, $\sigma$ is the surface tension of mercury, D is a pore diameter, and $\theta$ is a contact angle between mercury and a filler; incidentally, the surface tension of mercury was set to 480 dynes/cm, and the contact angle between mercury and the filler was set to 140 degrees].

<Binder Components (C-1) to (C-2)>

- ·"Binder component (C-1)": decyltrimethoxysilane
- ·"Binder component (C-2)": mixture (viscosity (25°C): 100 mPa·s) obtained by adding 20 ppm of a platinum catalyst (1,2-divinyltetramethyldisiloxane complex of platinum) in terms of platinum element and 300 ppm of 1-ethynyl-1-cyclohexanol to a mixture obtained by mixing bi-vinyl terminated silicone and a hydrosilyl group-containing polyorganosiloxane at a mass ratio of 97 : 3.

<Example 1>

To a planetary mixer were added 21.14 parts by volume of thermally conductive filler (A-1), 5.03 parts by volume of thermally conductive filler (B-1), 52.36 parts by volume of thermally conductive filler (B-2), 2.92 parts by volume of binder component (C-1), and 18.55 parts by volume of the binder component (C-2). The mixture was kneaded at room temperature for 60 minutes to prepare a resin composition. When the resin composition was prepared, weight conversion was performed so as to obtain a desired volume ratio assuming that the specific gravity of the thermal conductivity filler (A) was 3.98 g/cm$^3$, the specific gravity of the thermal conductivity filler (B) was 3.26 g/cm$^3$, and the specific gravity of the binder component (C) was 0.98 g/cm$^3$, and weighing was performed.

<Examples 2 to 9 and Comparative Examples 1 to 6>

Each resin composition was prepared in the same manner as in Example 1 except that the kind and amount of each raw material used were changed as designated in Table 2.
In Table 2, each numerical value in the section of the resin composition represents parts by volume.

[Fluidity of Composition]

First, 60 g of the obtained resin composition was filled in a syringe (PSY-30 F, manufactured by Musashi Engineering, Inc.) having a capacity of 30 cc. Then, the amount (fluidity [g/min]) of the resin composition extruded per minute was measured by applying 0.62 MPa of pressure to a piston at 25°C.
Note that the resin composition obtained in Comparative Example 4 was hard, and was hardly extruded even when the pressure was applied by the above method, so that the fluidity could not be measured.

[Formation of Sheet Body]

A laminate obtained by disposing 3 g of the obtained resin composition between a Naflon sheet (manufactured by NICHIAS Corporation) and a stainless steel (SUS) plate was disposed in a mold. Next, hot pressing at 1 ton was conducted at 80°C over 1 hour to produce a sheet body having a thickness of 1 mm.

[Thermal Conductivity]

In order to determine the thermal conductivity, the thermal diffusivity ($\alpha$), the density ($\rho$), and the specific heat (c) were measured by the following procedure using the obtained sheet body.
The thermal diffusivity ($\alpha$) of the obtained sheet body was measured 10 times (N = 10) using a thermal diffusivity meter (ai-Phase Mobile 2, manufactured by Hitachi High-Tech Corporation), and was averaged.
The density ($\rho$) of the sheet body was measured by the Archimedes method using an electronic balance (XS 204 V, manufactured by METTLER TOLEDO).
Further, the specific heat (c) of the sheet body was measured using a differential scanning calorimeter (DSC8230, manufactured by Rigaku Corporation).
The thermal diffusivity ($\alpha$), the density ($\rho$), and the specific heat (c) were used to calculate a thermal conductivity ($\lambda$) according to the following formula:

$$\lambda = \alpha \times \rho \times c.$$

[Table 2]

Table 2

| | | Example | | | | | | | | |
|---|---|---|---|---|---|---|---|---|---|---|
| | | 1 | 2 | 3 | 4 | 5 | 6 | 7 | 8 | 9 |
| Resin composition | Thermally conductive filler (A-1) | 21.14 | | 10.07 | 4.52 | | | 4.02 | 5.00 | |
| | Thermally conductive filler (A-2) | | | | | 4.52 | | | | |
| | Thermally conductive filler (A-3) | | | | | | 4.52 | | | |
| | Thermally conductive filler (A-4) | | 21.14 | | | | | | | 5.00 |
| | Thermally conductive filler (cA-1) | | | | | | | | | |
| | Thermally conductive filler (cA-2) | | | | | | | | | |
| | Thermally conductive filler (B-1) | 5.03 | 5.03 | 16.11 | 21.09 | 21.09 | 21.09 | 20.11 | | |
| | Thermally conductive filler (B-2) | 52.36 | 52.36 | 52.35 | | | | | | |
| | Thermally conductive filler (B-3) | | | | 19.08 | 19.08 | 19.08 | 18.10 | | |
| | Thermally conductive filler (B-4) | | | | 42.18 | 42.18 | 42.18 | 40.23 | | |
| | Thermally conductive filler (B-5) | | | | | | | | | |
| | Thermally conductive filler (B-6) | | | | | | | | 16.00 | 16.00 |
| | Thermally conductive filler (B-7) | | | | | | | | 25.00 | 25.00 |
| | Thermally conductive filler B-8) | | | | | | | | 35.00 | 35.00 |
| | Binder component (C-1) | 2.92 | 2.92 | 2.90 | 1.47 | 1.47 | 1.47 | 1.95 | 1.00 | 1.00 |
| | Binder component (C-2) | 18.55 | 18.55 | 18.57 | 11.67 | 11.67 | 11.67 | 15.59 | 18.00 | 18.00 |
| | Total | 100.00 | 100.00 | 100.00 | 100.00 | 100.00 | 100.00 | 100.00 | 100.00 | 100.00 |
| Filler filling rate (vol%) | | 78.5 | 78.5 | 78.5 | 86.9 | 86.9 | 86.9 | 82.5 | 81.0 | 81.0 |
| Cumulative pore amount (ml/g) of pores with a pore diameter of 0.5 μm or less in the entire filler (B) | | 0.015 | 0.015 | 0.024 | 0.018 | 0.018 | 0.018 | 0.018 | 0.011 | 0.011 |
| D10 (μm) of the entire filler (B) | | 1.2 | 1.2 | 0.9 | 1.0 | 1.0 | 1.0 | 1.0 | 0.9 | 0.9 |
| D50 (μm) of the entire filler (B) | | 5.1 | 5.1 | 3.5 | 68.7 | 68.7 | 68.7 | 68.7 | 31.0 | 31.0 |
| Fluidity (g/min) of composition | | 38.7 | 42.7 | 24.5 | 7.3 | 12.3 | 4.1 | 18 | 62.7 | 57.5 |
| Thermal conductivity (W/m·K) | | 5.8 | 4.1 | 7.0 | 19 | 19 | 18 | 13 | 5.6 | 5.1 |

Table 2 (continued)

| | | Comparative Example | | | | | |
|---|---|---|---|---|---|---|---|
| | | 1 | 2 | 3 | 4 | 5 | 6 |
| Resin composition | Thermally conductive filler (A-1) | | | 10.07 | | | |
| | Thermally conductive filler (A-2) | | | | | | |
| | Thermally conductive filler (A-3) | | | | | | |
| | Thermally conductive filler (A-4) | | | | | | |
| | Thermally conductive filler (cA-1) | 21.14 | 10.07 | | 4.52 | | 5.00 |
| | Thermally conductive filler (cA-2) | | | | | 4.52 | |
| | Thermally conductive filler (B-1) | 5.03 | 16.11 | | 21.09 | 21.09 | |
| | Thermally conductive filler (B-2) | 52.36 | 52.35 | 52.35 | | | |
| | Thermally conductive filler (B-3) | | | | 19.08 | 19.08 | |
| | Thermally conductive filler (B-4) | | | | 42.18 | 42.18 | |
| | Thermally conductive filler (B-5) | | | 16.11 | | | |
| | Thermally conductive filler (B-6) | | | | | | 16.00 |
| | Thermally conductive filler (B-7) | | | | | | 25.00 |
| | Thermally conductive filler B-8) | | | | | | 35.00 |
| | Binder component (C-1) | 2.92 | 2.90 | 2.90 | 1.47 | 1.47 | 1.00 |
| | Binder component (C-2) | 18.55 | 18.57 | 18.57 | 11.67 | 11.67 | 18.00 |
| | Total | 100.00 | 100.00 | 100.00 | 100.00 | 100.00 | 100.00 |
| Filler filling rate (vol%) | | 78.5 | 78.5 | 78.5 | 86.9 | 86.9 | 81.0 |
| Cumulative pore amount (ml/g) of pores with a pore diameter of 0.5 μm or less in the entire filler (B) | | 0.015 | 0.024 | 0.109 | 0.018 | 0.018 | 0.011 |
| D10 (μm) of the entire filler (B) | | 1.2 | 0.9 | 0.9 | 1.0 | 1.0 | 0.9 |
| D50 (μm) of the entire filler (B) | | 5.1 | 3.5 | 3.5 | 68.7 | 68.7 | 31.0 |
| Fluidity (g/min) of composition | | 2.0 | 5.9 | 6.3 | N.D. | 3.2 | 31.9 |
| Thermal conductivity (W/m·K) | | 5.5 | 6.7 | 6.8 | 19 | 18 | 5.5 |

In both of Example 4 to 6 and Comparative Examples 4 and 5 in which the filler filling rate for the resin composition was 86.9 vol%, the thermal conductivity was favorable, although the fluidity of any of the resin compositions was lower than that of Example 7 in which the filler filling rate was about 82.5 vol% because the filler filling rate was high. However, in the case of using the thermally conductive filler (A-1) or (A-2) having a polyhedral spherical shape as in Examples 4 and 5, the fluidity was high even under a situation where the filler filling rate was markedly high. This is presumed to be because the thermally conductive filler (A-1) or (A-2) moved relatively smoothly in response to external force.

## Claims

**1.** A filler mixture comprising:

a thermally conductive filler (A) having a cumulative volume 50% particle diameter D50(A) of 0.05 μm or more and less than 1.0 μm and a cumulative volume 90% particle diameter D90(A) of 2.0 μm or less in a particle size distribution curve determined by laser diffractometry; and
a thermally conductive filler (B), wherein
the filler mixture satisfies the following requirements (4) to (6):

requirement (4): in the entire thermally conductive filler (B) used in the filler mixture, a cumulative pore amount of pores with a pore diameter of 0.5 μm or less as calculated from a pore diameter distribution measured with a mercury porosimeter according to the description is 0.05 ml/g or less;
requirement (5): the entire thermally conductive filler (B) used in the filler mixture has a cumulative volume 50% particle diameter D50(B) of from 1.0 to 100 μm; and
requirement (6): the entire thermally conductive filler (B) used in the filler mixture has a cumulative volume 10% particle diameter D10(B) of 0.6 μm or more,

wherein the D10, D50 and D90 are determined according to the method of the description.

**2.** The filler mixture according to claim 1, wherein

the thermally conductive filler (A) comprises alumina, and
the thermally conductive filler (B) comprises aluminum nitride or alumina.

**3.** A composition comprising:

a thermally conductive filler (A) having a cumulative volume 50% particle diameter D50(A) of 0.05 μm or more and less than 1.0 μm and a cumulative volume 90% particle diameter D90(A) of 2.0 μm or less in a particle size distribution curve determined by laser diffractometry;
a thermally conductive filler (B); and
a binder component (C), wherein
the composition satisfies the following requirements (1) to (3):

requirement (1): in the entire thermally conductive filler (B) used in the composition, a cumulative pore amount of pores with a pore diameter of 0.5 μm or less as calculated from a pore diameter distribution measured with a mercury porosimeter according to the description is 0.05 ml/g or less;
requirement (2): the entire thermally conductive filler (B) used in the composition has a cumulative volume 50% particle diameter D50(B) of from 1.0 to 100 μm; and
requirement (3): the entire thermally conductive filler (B) used in the composition has a cumulative volume 10% particle diameter D10(B) of 0.6 μm or more,

wherein the D10, D50 and D90 were determined according to the method of the description.

**4.** The composition according to claim 3, wherein a ratio SA/D90(A) of a BET specific surface area SA [$m^2$/g] to the D90(A) [μm] of the thermally conductive filler (A) is 4.0 or more, wherein the BET is determined according to the method of the description.

**5.** The composition according to claim 3 or 4, wherein a ratio Y/D90(A) of a density ratio Y, namely a ratio of a pressurized bulk density [g/$cm^3$] to a true density [g/$cm^3$], to the D90(A) [μm] of the thermally conductive filler (A) is 0.5 or more.

**6.** The composition according to any one of claims 3 to 5, wherein a ratio Y/(SA × D90(A)) of a density ratio Y, namely a ratio of a pressurized bulk density [g/$cm^3$] to a true density [g/$cm^3$], to a product of a BET specific surface area SA [$m^2$/g] multiplied by the D90(A) [μm] of the thermally conductive filler (A) is 0.08 or more.

**7.** The composition according to any one of claims 3 to 6, wherein the thermally conductive filler (A) has a polyhedral spherical shape.

**8.** The composition according to any one of claims 3 to 7, wherein the thermally conductive filler (A) has a D50(A) of 0.05 μm or more and less than 0.6 μm.

**9.** The composition according to any one of claims 3 to 8, wherein a ratio Y/(SA × (D90(A) - D50(A))) of a density ratio Y, namely a ratio of a pressurized bulk density [g/$cm^3$] to a true density [g/$cm^3$], to a product SA × (D90(A) - D50(A)) of a BET specific surface area SA [$m^2$/g] multiplied by a difference between the D90(A) [μm] and the D50(A) [μm] of the thermally conductive filler (A) is 0.14 or more.

**10.** The composition according to any one of claims 3 to 9, wherein

based on 100 vol% of a total of the thermally conductive filler (A), the thermally conductive filler (B), and the binder component (C),
an amount of the thermally conductive filler (A) blended is from 1 to 45 vol%, and
an amount of the thermally conductive filler (B) blended is from 25 to 90 vol%.

**11.** The composition according to any one of claims 3 to 10, wherein

the thermally conductive filler (A) comprises alumina, and
the thermally conductive filler (B) comprises aluminum nitride or alumina.

## Patentansprüche

**1.** Füllstoffmischung, umfassend:

einen wärmeleitfähigen Füllstoff (A) mit einem kumulativen volumenbezogenen 50 %-Partikeldurchmesser D50(A) von 0,05 μm oder mehr und weniger als 1,0 μm, und einem kumulativen volumenbezogenen 90 %-Partikeldurchmesser D90(A) von 2,0 μm oder weniger in einer Partikelgrößenverteilungskurve, die durch Laserdiffraktometrie bestimmt wird; und
einen wärmeleitfähigen Füllstoff (B), wobei
die Füllstoffmischung die folgenden Anforderungen (4) bis (6) erfüllt:

Anforderung (4): In dem gesamten wärmeleitfähigen Füllstoff (B), der in der Füllstoffmischung verwendet wird, beträgt eine kumulative Porenmenge von Poren mit einem Porendurchmesser von 0,5 μm oder weniger, berechnet aus einer Porendurchmesserverteilung, gemessen mit einem Quecksilberporosimeter nach der Beschreibung, 0,05 ml/g oder weniger;
Anforderung (5): Der gesamte in der Füllstoffmischung verwendete wärmeleitfähige Füllstoff (B) weist einen kumulativen volumenbezogenen 50 %-Partikeldurchmesser D50(B) von 1,0 bis 100 μm auf; und
Anforderung (6): Der gesamte in der Füllstoffmischung verwendete wärmeleitfähige Füllstoff (B) weist einen kumulativen volumenbezogenen 10 %-Partikeldurchmesser D10(B) von 0,6 μm oder mehr auf,

wobei D10, D50 und D90 nach dem Verfahren der Beschreibung bestimmt werden.

**2.** Füllstoffmischung nach Anspruch 1, wobei

der wärmeleitfähige Füllstoff (A) Aluminiumoxid umfasst, und
der wärmeleitfähige Füllstoff (B) Aluminiumnitrid oder Aluminiumoxid umfasst.

**3.** Zusammensetzung, umfassend:

einen wärmeleitfähigen Füllstoff (A) mit einem kumulativen volumenbezogenen 50 %-Partikeldurchmesser D50(A) von 0,05 μm oder mehr und weniger als 1,0 μm, und einem kumulativen volumenbezogenen 90 %-Partikeldurchmesser D90(A) von 2,0 μm oder weniger in einer durch Laserdiffraktometrie bestimmten Partikelgrößenverteilungskurve;
einen wärmeleitfähigen Füllstoff (B); und
eine Bindemittelkomponente (C), wobei
die Zusammensetzung die folgenden Anforderungen (1) bis (3) erfüllt:

Anforderung (1): in dem gesamten wärmeleitfähigen Füllstoff (B), der in der Zusammensetzung verwendet wird, beträgt eine kumulative Porenmenge von Poren mit einem Porendurchmesser von 0,5 μm oder weniger, berechnet aus einer Porendurchmesserverteilung, gemessen mit einem Quecksilberporosimeter nach der Beschreibung, 0,05 ml/g oder weniger;
Anforderung (2): Der gesamte in der Zusammensetzung verwendete wärmeleitfähige Füllstoff (B) weist einen kumulativen volumenbezogenen 50 %-Partikeldurchmesser D50(B) von 1,0 bis 100 μm auf; und
Anforderung (3): Der gesamte in der Zusammensetzung verwendete wärmeleitfähige Füllstoff (B) weist einen kumulativen volumenbezogenen 10 %-Partikeldurchmesser D10(B) von 0,6 μm oder mehr auf,

wobei D10, D50 und D90 nach dem Verfahren der Beschreibung bestimmt wurden.

4. Zusammensetzung nach Anspruch 3, wobei das Verhältnis SA/D90(A) eines BET-spezifischen Oberflächenbereichs SA [$m^2$/g] zum D90(A) [μm] des wärmeleitfähigen Füllstoffs (A) 4,0 oder mehr beträgt, wobei der BET nach dem Verfahren in der Beschreibung bestimmt wird.

5. Zusammensetzung nach Anspruch 3 oder 4, wobei ein Verhältnis Y/D90(A) eines Dichteverhältnisses Y, nämlich ein Verhältnis einer druckbeaufschlagten Schüttdichte [g/$cm^3$] zu einer wahren Dichte [g/$cm^3$], zu dem D90(A) [μm] des wärmeleitfähigen Füllstoffs (A) 0,5 oder mehr beträgt.

6. Zusammensetzung nach einem der Ansprüche 3 bis 5, wobei ein Verhältnis Y/(SA × D90(A)) eines Dichteverhältnisses Y, nämlich ein Verhältnis einer druckbeaufschlagten Schüttdichte [g/$cm^3$] zu einer wahren Dichte [g/$cm^3$], zu einem Produkt eines BET-spezifischen Oberflächenbereichs SA [$m^2$/g], multipliziert mit dem D90(A) [μm] des wärmeleitfähigen Füllstoffs (A), 0,08 oder mehr beträgt.

7. Zusammensetzung nach einem der Ansprüche 3 bis 6, wobei der wärmeleitfähige Füllstoff (A) eine polyedrische Kugelform aufweist.

8. Zusammensetzung nach einem der Ansprüche 3 bis 7, wobei der wärmeleitfähige Füllstoff (A) einen D50(A)-Wert von 0,05 μm oder mehr und weniger als 0,6 μm aufweist.

9. Zusammensetzung nach einem der Ansprüche 3 bis 8, wobei ein Verhältnis Y/(SA × (D90(A) - D50(A))) eines Dichteverhältnisses Y, nämlich ein Verhältnis einer druckbeaufschlagten Schüttdichte [g/$cm^3$] zu einer wahren Dichte [g/$cm^3$], zu einem Produkt SA × (D90(A) - D50(A)) eines BET-spezifischen Oberflächenbereichs SA [$m^2$/g], multipliziert mit einer Differenz zwischen D90(A) [μm] und D50(A) [μm] des wärmeleitfähigen Füllstoffs (A), 0,14 oder mehr beträgt.

10. Zusammensetzung nach einem der Ansprüche 3 bis 9, wobei

basierend auf 100 Volumenprozent einer Gesamtmenge des wärmeleitfähigen Füllstoffs (A), des wärmeleitfähigen Füllstoffs (B) und der Bindemittelkomponente (C)
eine Menge des vermischten wärmeleitfähigen Füllstoffs (A) 1 bis 45 Vol.-% beträgt, und
eine Menge des vermischten wärmeleitfähigen Füllstoffs (B) 25 bis 90 Vol.-% beträgt.

11. Zusammensetzung nach einem der Ansprüche 3 bis 10, wobei

der wärmeleitfähige Füllstoff (A) Aluminiumoxid umfasst, und
der wärmeleitfähige Füllstoff (B) Aluminiumnitrid oder Aluminiumoxid umfasst.

## Revendications

1. Mélange de charges comprenant :

une charge thermoconductrice (A) présentant un diamètre de particule D50(A) à 50 % du volume cumulé de 0,05 μm ou plus et de moins de 1,0 μm et un diamètre de particule D90(A) à 90 % du volume cumulé de 2,0 μm ou moins sur une courbe de distribution granulométrique déterminée par diffractométrie laser ; et
une charge thermoconductrice (B), dans lequel
le mélange de charges satisfait les exigences (4) à (6) suivantes :

Exigence (4) : dans la totalité de la charge thermoconductrice (B) utilisée dans le mélange de charges, une quantité cumulée de pores ayant un diamètre de pore de 0,5 μm ou moins, telle que calculée à partir d'une distribution de diamètre de pores mesurée avec un porosimètre à mercure selon la description, est de 0,05 ml/g ou moins ;
Exigence (5) : la totalité de la charge thermoconductrice (B) utilisée dans le mélange de charges présente un diamètre de particule D50(B) à 50 % du volume cumulé de 1,0 à 100 μm ; et
Exigence (6) : la totalité de la charge thermoconductrice (B) utilisée dans le mélange de charges présente un diamètre de particule D10(B) à 10 % du volume cumulé de 0,6 μm ou plus, dans lequel les D10, D50 et D90 sont déterminés selon le procédé de la description.

2. Mélange de charges selon la revendication 1, dans lequel

la charge thermoconductrice (A) comprend de l'alumine, et
la charge thermoconductrice (B) comprend du nitrure d'aluminium ou de l'alumine.

3. Composition comprenant :

une charge thermoconductrice (A) présentant un diamètre de particule D50(A) à 50 % du volume cumulé de 0,05 μm ou plus et de moins de 1,0 μm et un diamètre de particule D90(A) à 90 % du volume cumulé de 2,0 μm ou moins sur une courbe de distribution granulométrique déterminée par diffractométrie laser ;
une charge thermoconductrice (B) ; et
un composant liant (C), dans laquelle
la composition satisfait aux exigences (1) à (3) suivantes :

Exigence (1) : dans la totalité de la charge thermoconductrice (B) utilisée dans la composition, une quantité cumulée de pores ayant un diamètre de pore de 0,5 μm ou moins, telle que calculée à partir d'une distribution de diamètre de pores mesurée avec un porosimètre à mercure selon la description est de 0,05 ml/g ou moins ;
Exigence (2) : la totalité de la charge thermoconductrice (B) utilisée dans la composition présente un diamètre de particule D50(B) à 50 % du volume cumulé de 1,0 à 100 μm ; et
Exigence (3) : la totalité de la charge thermoconductrice (B) utilisée dans la composition présente un diamètre de particule D10(B) à 10 % du volume cumulé de 0,6 μm ou plus,
dans laquelle les D10, D50 et D90 ont été déterminés selon le procédé de la description.

4. Composition selon la revendication 3, dans laquelle un rapport SA/D90(A) d'une surface spécifique BET SA [$m^2$/g] sur le D90(A) [μm] de la charge thermoconductrice (A) est de 4,0 ou plus, dans laquelle le BET est déterminé selon le procédé de la description.

5. Composition selon la revendication 3 ou la revendication 4, dans laquelle un rapport Y/D90(A) d'un rapport de masse volumique Y, à savoir un rapport d'une masse volumique apparente sous pression [g/$cm^3$] sur une masse volumique réelle [g/$cm^3$], sur le D90(A) [μm] de la charge thermoconductrice (A) est de 0,5 ou plus.

6. Composition selon l'une quelconque des revendications 3 à 5, dans laquelle un rapport Y/(SA x D90(A)) d'un rapport de masse volumique Y, à savoir un rapport d'une masse volumique apparente sous pression [g/$cm^3$] sur une masse volumique réelle [g/$cm^3$], sur un produit d'une surface spécifique BET SA [$m^2$/g] multipliée par le D90(A) [μm] de la charge thermoconductrice (A) est de 0,08 ou plus.

7. Composition selon l'une quelconque des revendications 3 à 6, dans laquelle la charge thermoconductrice (A) présente une forme sphérique polyédrique.

8. Composition selon l'une quelconque des revendications 3 à 7, dans laquelle la charge thermoconductrice (A) présente un D50(A) de 0,05 μm ou plus et de moins de 0,6 μm.

9. Composition selon l'une quelconque des revendications 3 à 8, dans laquelle un rapport Y/(SA x (D90(A) - D50(A))) d'un rapport de masse volumique Y, à savoir un rapport d'une masse volumique apparente sous pression [g/$cm^3$] sur une masse volumique réelle [g/$cm^3$], sur un produit SA x (D90(A) - D50(A)) d'une surface spécifique **BET** SA [$m^2$/g] multipliée par une différence entre le D90(A) [μm] et le D50(A) [μm] de la charge thermoconductrice (A) est de 0,14 ou plus.

10. Composition selon l'une quelconque des revendications 3 à 9, dans laquelle

sur la base de 100 % en volume d'un total de la charge thermoconductrice (A), de la charge thermoconductrice (B) et du composant liant (C),
une quantité de la charge thermoconductrice (A) mélangée est de 1 à 45 % en volume, et
une quantité de la charge thermoconductrice (B) mélangée est de 25 à 90 % en volume.

11. Composition selon l'une quelconque des revendications 3 à 10, dans laquelle

la charge thermoconductrice (A) comprend de l'alumine, et

la charge thermoconductrice (B) comprend du nitrure d'aluminium ou de l'alumine.

[Fig. 1]

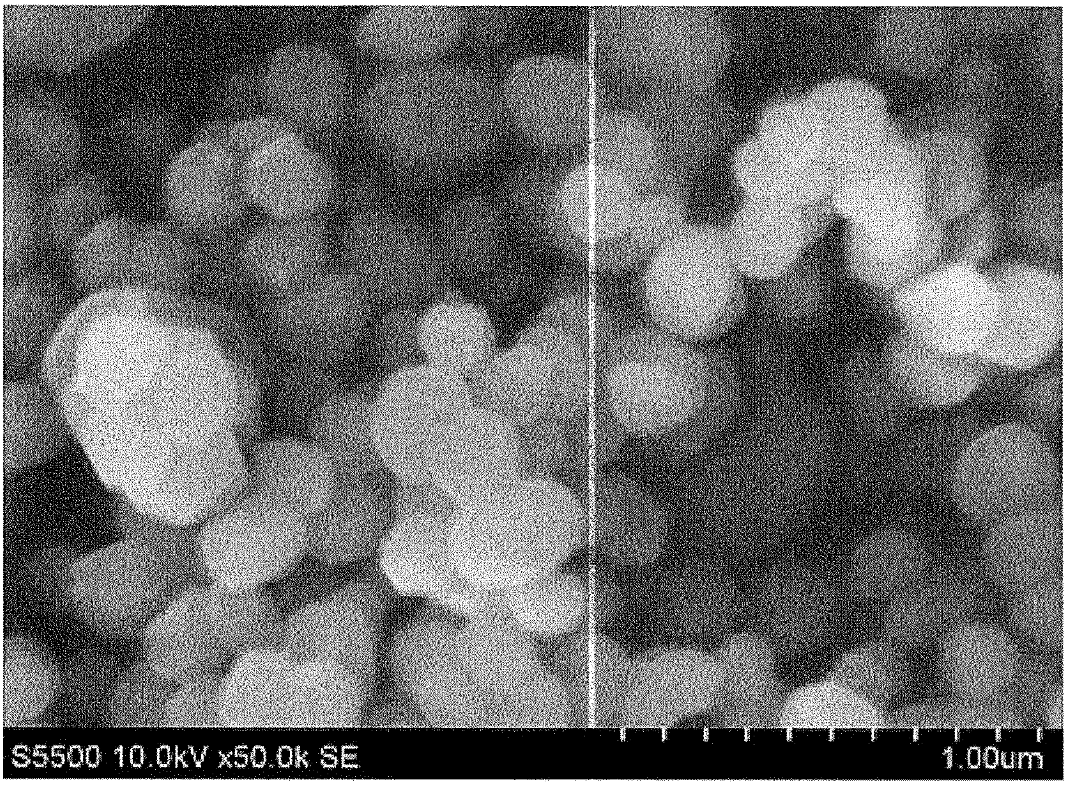


[Fig. 2]

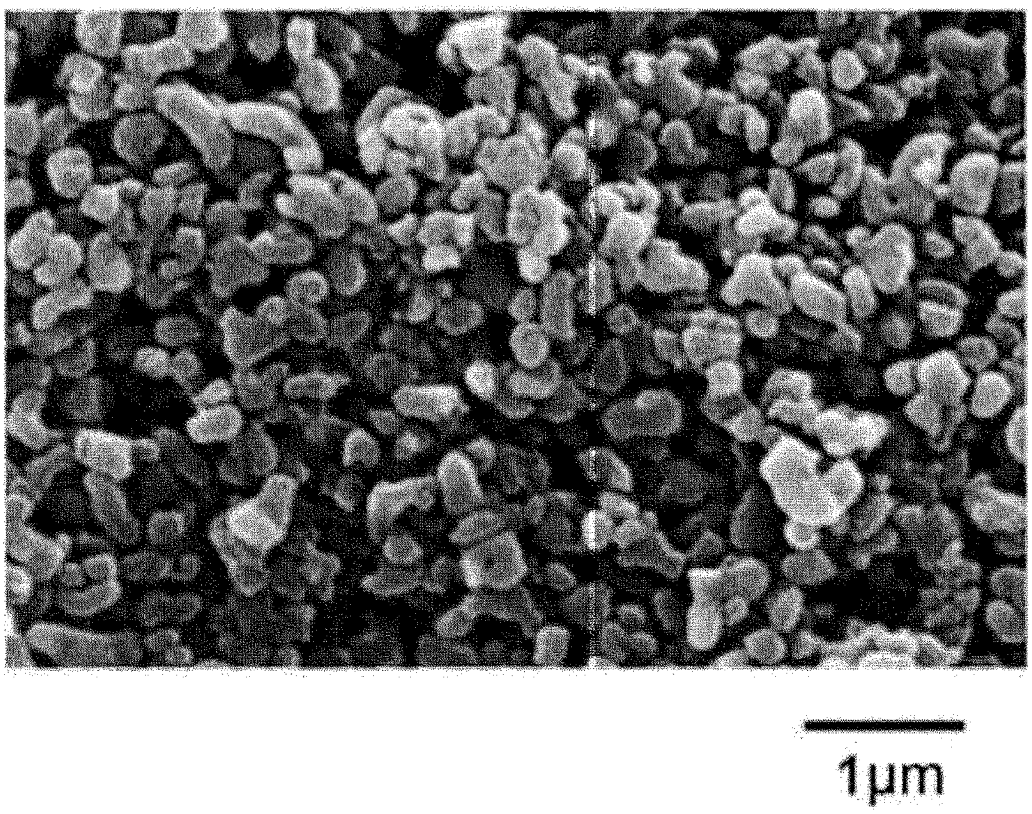

[Fig. 3]

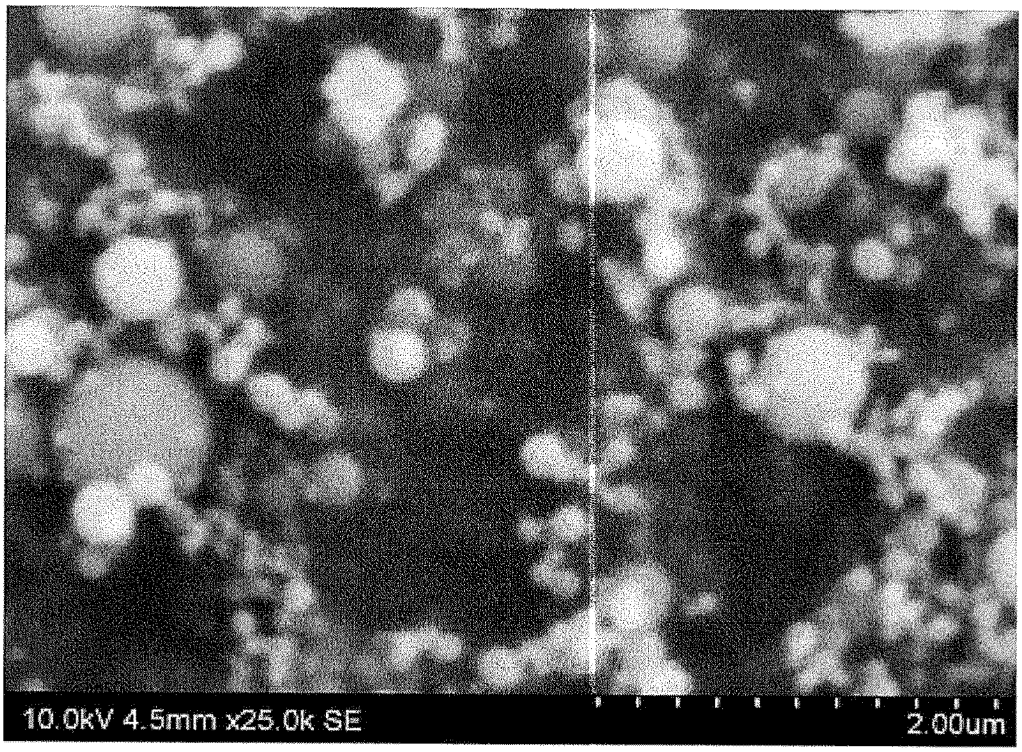

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017014445 A
- JP 2010007039 A
- JP 2009164093 A
- WO 2018131486 A
- US 2021147681 A1